# EUROPÄISCHE PATENTSCHRIFT

(11) **EP 1 256 416 B1**
(45) Veröffentlichungstag und Bekanntmachung des Hinweises auf die Patenterteilung: **06.12.2006**
(21) Anmeldenummer: 01121685.0
(22) Anmeldetag: 14.09.2001
(51) Int. Cl.: B23Q 7/05, B23Q 7/00, B65G 1/08, B65G 47/64

(54) **Kurbeltrieb zur Rückführung von Werkstücken**
Crank drive for the recirculation of machined parts
Entraînement à manivelle pour ramener des pièces usinées à la station de départ

(30) Priorität: 09.05.2001 DE 20107813 U
(43) Veröffentlichungstag der Anmeldung: 13.11.2002
(73) Patentinhaber: Ligmatech Automationssysteme GmbH, 09638 Lichtenberg (DE)
(72) Erfinder: Tönnigs, Bodo, 09638 Lichtenberg (DE); Kaden, Dietmar, 09619 Mulda (DE)
(74) Vertreter: HOFFMANN EITLE

(56) Entgegenhaltungen:
- DE-A- 2 504 441
- SU-A- 1 162 715
- PATENT ABSTRACTS OF JAPAN vol. 018, no. 459 (M-1663), 26. August 1994 (1994-08-26) & JP 06 144552 A (MURATA MACH LTD), 24. Mai 1994 (1994-05-24)

## Beschreibung

### Technisches Gebiet

Die Erfindung betrifft eine Vorrichtung zur Rückführung von bearbeiteten Werkstücken von der Ausgabeseite zu der Beschickungsseite einer Bearbeitungseinheit. Die Vorrichtung weist eine Übernahmeeinrichtung zur Übernahme der Werkstücke an der Ausgabeseite der Bearbeitungseinheit auf, eine Rücklaufbahn zum Transportieren der von der Übernahmeeinrichtung angelieferten Werkstücke zurück zur Beschickungsseite der Bearbeitungseinheit oder zu einer weiteren Bearbeitungseinheit, und eine Hubeinrichtung zum Anheben der Werkstücke in eine oberhalb der Ausgabehöhe liegende Rückführposition, die zwischen der Übernahmeeinrichtung und der Rücklaufbahn angeordnet ist und die einen Hubtisch aufweist.

Bei der Bearbeitung von Werkstücken, vorzugsweise plattenförmigen, streifenförmigen oder leistenförmigen Werkstücken, die insbesondere aus Holz, Holz ähnlichen Werkstoffen oder Kunststoffen aufgebaut sind, ist es oftmals notwendig, die Bearbeitung eines Werkstücks an einer Bearbeitungseinheit mehrmals durchzuführen. Unter einer Bearbeitungseinheit werden hier vornehmlich eine oder mehrere Bearbeitungsstationen oder sogenannte Durchlaufmaschinen verstanden. Bei Durchlaufmaschinen werden jeweils an einer Seitenkante des Werkstücks verschiedene Bearbeitungsvorgänge in einem Durchlauf durchgeführt.

Eine derartige Bearbeitung der Seitenkanten eines Werkstücks ist z.B. bei Möbelteilen oder Küchenfronten nötig, die an allen vier Seitenkanten bzw. Randbereichen bearbeitet werden müssen, um beispielsweise eine Kante aufzuleimen und zu bearbeiten. Da diese Maschinen meist eine größere Längserstreckung aufweisen, ist es erforderlich, die Werkstücke nach einem oder mehreren Bearbeitungsschritten zur Beschickungsseite zurückzuführen.

### Stand der Technik

Die einfachste Möglichkeit zur Rückführung der Werkstücke besteht darin, an beiden Enden der Bearbeitungseinheit jeweils einen Bediener abzustellen, von denen einer die Werkstücke auf der Beschickungsseite einlegt und der andere die bearbeiteten Werkstücke an der Ausgabeseite der Bearbeitungseinheit abnimmt und per Hand, einzeln oder in Stapeln, zur Beschickungsseite zurücktransportiert. Ein solches Vorgehen ist jedoch zeit- und kostenintensiv und verhindert die optimale Auslastung der Bearbeitungseinheit.

Es sind daher verschiedene Rückführvorrichtungen entwickelt worden.

In einer bekannten Ausgestaltung werden die Werkstücke am Ende der Bearbeitungseinheit auf eine im Halbkreis geführte Laufrollenbahn gebracht, die die Werkstücke in der horizontalen Ebene um 180° umdreht. An die Laufrollenbahn schließt sich eine Rücklaufbahn an, welche parallel zur Bearbeitungsbahn verläuft und die Werkstücke zur Beschickungsseite zurücktransportiert.

Anstelle der im Halbkreis geführten Laufrollenbahn ist gemäß dem Deutschen Gebrauchsmuster G 200 16 186 eine Versetzeinrichtung zwischen der Bearbeitungs- und der daneben verlaufenden Rücklaufbahn vorgesehen: die Werkstücke werden nach der Bearbeitung in der Bearbeitungseinheit an der Ausgabeseite von angetriebenen Walzen übernommen, und Auflageleisten der Versetzeinrichtung werden zwischen diesen Walzen von unten nach oben hindurchgeführt und heben das Werkstück an. Die Auflageleisten werden dann zusammen mit dem Werkstück seitlich versetzt und legen das Werkstück auf der Rücklaufbahn ab.

Solche Rückführvorrichtungen, bei denen die Rücklaufbahn im wesentlichen auf gleicher Höhe wie die Bearbeitungsbahn und neben der Bearbeitungsbahn verläuft, erfordern zum einen viel Platz seitlich der Bearbeitungsmaschine. Zum anderen verschmutzt die Rücklaufbahn sehr stark, da gerade in der Holzbearbeitungsindustrie ständig feinste Späne oder dergleichen bei der Bearbeitung anfallen. Somit erfordert die Rücklaufbahn einen hohen Wartungsaufwand, was mit hohen Kosten verbunden ist.

Um diese Probleme zu lösen, ist in der Rückführvorrichtung gemäß DE-U-93 07 220, die Rücklaufbahn oberhalb der Bearbeitungsbahn angeordnet. An die Bearbeitungbahn schließt sich eine Übernahmeeinrichtung für das Werkstück an, und zwischen der Übernahmeeinrichtung und der Rücklaufbahn ist eine Hubeinrichtung zum Anheben der Werkstücke in eine oberhalb der Ausgabehöhe liegende Rückführposition angeordnet. Die Hubeinrichtung weist dabei einen Hubtisch auf, der beispielsweise über ein Scherengitter, das über Hydraulik- oder Pneumatikzylinder angetrieben ist, vertikal verstellbar ist. Die Rücklaufbahn ist hier vorzugsweise zwischen der Rückführposition und der Beschickungsseite gegenüber der Horizontalen so geneigt, dass die bearbeiteten Werkstücke unter Ausnutzung der Schwerkraft zur Beschickungsseite zurücktransportiert werden.

Diese Lösung bietet den Vorteil, dass der bisher ungenutzte Raum oberhalb der Bearbeitungsanordnung für die Rückführung der Werkstücke genutzt wird. Der Platzbedarf für die Rückführvorrichtung wird stark reduziert, und eine dichte Stellung der in einer Fertigungshalle stehenden Bearbeitungseinheiten ist möglich. Außerdem kann die Rückführvorrichtung an bereits bestehende Bearbeitungsmaschinen angebaut werden. Da die Rücklaufbahn oberhalb der Bearbeitungsbahn verläuft, setzen sich Späne, die während der Bearbeitung anfallen, nicht mehr so leicht an der Rücklaufbahn ab, so dass auch der Wartungsaufwand für die Rücklaufbahn sinkt.

Wenn während der Bearbeitung ein hoher Durchsatz erzielt werden soll, gestalten sich die Steuerung der Rückführvorrichtung sowie die notwendige Synchronisierung zwischen Bearbeitungseinheit und Rückführvorrichtung jedoch relativ aufwendig.

Ferner offenbaren die JP-A-06-144552 und die US-A-1 162 715 bekannte Kurbeltriebe.

### Darstellung der Erfindung

Der vorliegenden Erfindung liegt die Aufgabe zugrunde, die bekannte Rückführvorrichtung mit oberhalb der Bearbeitungsbahn liegender Rücklaufbahn und Hubeinrichtung mit Hubtisch dahingehend zu verbessern, dass die Taktleistung ohne großen Steuerungsaufwand erhöht und die Hubbewegung harmonisiert werden kann.

Die Lösung dieses technischen Problems besteht darin, dass die Hubeinrichtung einen Kurbeltrieb aufweist, mittels dessen der Hubtisch anhebbar und absenkbar ist.

Dadurch ist ein vereinfachter Antrieb des Hubtisches unter Verwendung eines herkömmlichen Antriebsmotors möglich. Der Kurbeltrieb sorgt für eine Umwandlung einer Drehbewegung in eine translatorische Bewegung. Aufgrund dieser kontinuierlichen Umwandlung einer Drehbewegung in eine Hubbewegung ist keine aufwändige Elektronik für den Transport der Werkstücke erforderlich, um die Hubeinrichtung mit den von der Bearbeitungseinheit kommenden Werkstücken zur Steigerung der Durchlaufgeschwindigkeit zu synchronisieren.

Da die Hubbewegung des Hubtisches mittels des Kurbeltriebs erzeugt wird, kommt es in vorteilhafter Art und Weise zu einem sanften Anlauf der Hubeinrichtung, wodurch verhindert wird, dass sich die auf dem Hubtisch befindlichen Werkstücke aufgrund ihrer Trägheit auf dem Hubtisch verschieben oder sogar von ihm herunterfallen. Anschließend an diesen sanften Anlauf wird die Hubbewegung beschleunigt und somit eine hohe Transportgeschwindigkeit der Werkstücke erreicht, um eine ausreichend hohe Taktleistung der Rückführvorrichtung zu erzielen. Daraufhin werden die Werkstücke am Ende der Hubbewegung sanft abgebremst, so dass sie sicher an die Rücklaufeinrichtung übergeben werden können.

Der Kurbeltrieb gewährleistet somit ein sanftes Anfahren mit einer darauf folgenden hohen Transportgeschwindigkeit und einer anschließenden sanften Abbremsung der auf dem Hubtisch befindlichen Werkstücke, ohne dass eine aufwändige Steuerung elektrischer, pneumatischer oder hydraulischer Art erforderlich wäre. Folglich wird durch den Kurbeltrieb mit einfachen Mitteln ein besonders vorteilhaftes Transportprofil für die Werkstücke ermöglicht, wobei der Verlauf der Geschwindigkeit der Werkstücke durch die Umwandlung einer Rotations- in eine translatorische Bewegung der Sinus- bzw. Cosinusfunktion entspricht.

Vorteilhafte Weiterbildungen der erfindungsgemäßen Rückführvorrichtung sind in den weiteren Ansprüchen beschrieben.

Gemäß einer vorteilhaften Ausführungsform weist der Kurbeltrieb eine angetriebene Drehachse auf, an der eine Kurbel angebracht ist. Dabei weist die Hubeinrichtung bevorzugt eine mit dem Hubtisch gekoppelte Fahrschiene auf, in der das freie Ende der Kurbel geführt ist und die mit dem Hubtisch in Verbindung steht. Diese Fahrschiene wird dabei in ihrer Hubbewegung mittels zumindest einer Führungsschiene geführt. Somit ist über die geführte Fahrschiene der Weg des Hubtisches vorgegeben, so dass die Werkstücke über einen definierten Weg von der Übernahmeeinrichtung zu einer vorbestimmten Rückführposition an der Rücklaufeinrichtung transportiert werden.

Dabei kann die zumindest eine Führungsschiene vertikal verlaufen oder gegenüber der Vertikalen geneigt sein. In einer besonders vorteilhaften Ausgestaltung der Erfindung ist die Neigung der Führungsschiene gegenüber der Vertikalen einstellbar. Die Verstellung erfolgt dabei über eine Verstellvorrichtung, die elektrisch, mechanisch, pneumatisch oder hydraulisch betätigbar sein kann. In dieser Weise ist die erfindungsgemäße Rückführrichtung an verschiedene bestehende Bearbeitungseinheiten anpassbar, indem die Führungsschiene jeweils so weit geneigt wird, dass der Hubtisch vor der bestehenden Bearbeitungseinheit vorbei geführt werden kann und die Rücklaufbahn vor der bestehenden Bearbeitungseinheit entlang verläuft.

Vorzugsweise weist die Fahrschiene gehärtete Leisten zur Aufnahme des freien Endes der Kurbel auf, welche insbesondere eingeklebt sind. Dadurch vermindert sich der Abrieb zwischen den bewegten Teilen, um die Lebensdauer der Vorrichtung zu erhöhen. Das Einkleben erleichtert die Montage der Leisten in die Fahrschiene.

Vorteilhafterweise trägt das freie Ende der Kurbel eine Rolle, die in Längsrichtung in der Fahrschiene verfahrbar ist. Dadurch vermindert sich die Reibung zwischen dem Kurbelende und der Fahrschiene, so dass sich der Wirkungsgrad der Vorrichtung erhöht.

An dem Hubtisch sind vorzugsweise drehbare Transportrollen angeordnet, deren Drehachsen im wesentlichen senkrecht zur Transportrichtung des Werkstücks liegen. Ein Werkstück, das von der Übernahmeeinrichtung an den Hubtisch übergeben wird, rollt dann auf diesen Transportrollen ab bis zu einer geeigneten Position auf dem Hubtisch. Dabei können die Transportrollen angetrieben sein, um das Werkstück in diese geeignete Lage zu befördern und um insbesondere auch nach dem Hubvorgang die Übergabe des Werkstücks vom Hubtisch an die Rücklaufeinrichtung anzustoßen.

Darüber hinaus ist es vorteilhaft, wenn der Kurbeltrieb mit der Bearbeitungseinheit synchronisiert ist, wodurch die Taktleistung der Vorrichtung weiter erhöht werden kann, da der Durchlauf der Werkstücke von der Bearbeitungseinheit zur Übernahmeeinrichtung und von dort zum Hubtisch und zur Rücklaufbahn aufeinander abgestimmt ist.

Die Rücklaufeinrichtung weist vorzugsweise eine Rücklaufbahn zum Zurückführen der Werkstücke vom Hubtisch zur Beschickungsseite der Bearbeitungseinheit auf. In einer vorteilhaften Ausgestaltung ist die Rücklaufbahn zwischen der Rückführposition und der Beschickungsseite derart gegenüber der Horizontalen geneigt, dass die Werkstücke unter Ausnutzung der Schwerkraft zur Beschickungsseite der Bearbeitungseinheit zurücktransportiert werden. In dieser Ausgestaltung ist dann kein zusätzlicher Antrieb für das Zurückführen der Werkstücke vom Hubtisch zur Beschickungsseite notwendig. Dabei sind vorzugsweise drehbare Transportrollen an der Rücklaufbahn angeordnet, deren Drehachsen im wesentlichen senkrecht zur Transportrichtung des Werkstücks liegen.

Schließlich ist es jedoch auch denkbar, die Rücklaufbahn mit einem angetriebenen Transportbahn für die Rückführung der Werkstücke vom Hubtisch zur Beschickungsseite zu versehen.

### Kurze Beschreibung der Zeichnungen

Im folgenden wird eine beispielhafte Ausführungsform der erfindungsgemäßen Vorrichtung zur Rückführung von bearbeiteten Werkstücken anhand von Zeichnungen beschrieben.

Im einzelnen zeigt:
- Fig. 1: eine schematische Seitenansicht einer erfindungsgemäßen Vorrichtung,
- Fig. 2: eine schematische Rückansicht einer erfindungsgemäßen Vorrichtung,
- Fig. 3: eine Seitenansicht einer erfindungsgemäßen Vorrichtung,
- Fig. 4: eine Rückansicht einer erfindungsgemäßen Vorrichtung,
- Fig. 5: einen Kurbeltrieb einer erfindungsgemäßen Vorrichtung in vier verschiedenen Stellungen,
- Fig. 6: einen Kurbeltrieb einer erfindungsgemäßen Vorrichtung in Seitenansicht, und
- Fig. 7: einen Kurbeltrieb einer erfindungsgemäßen Vorrichtung in Rückansicht.

### Ausführliche Beschreibung einer bevorzugten Ausführungsform

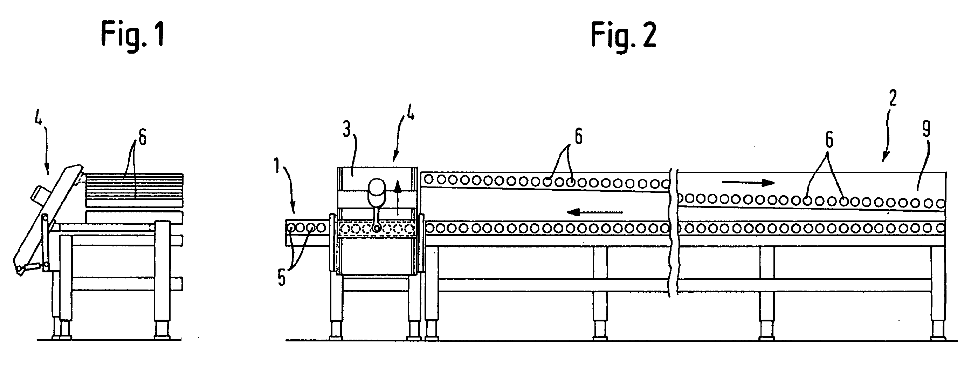

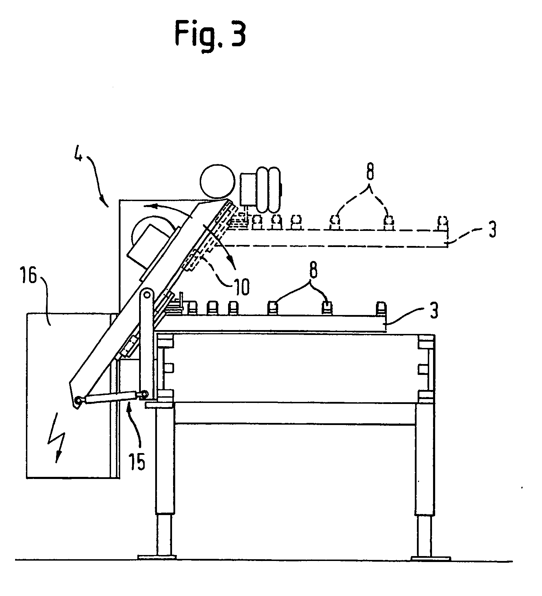

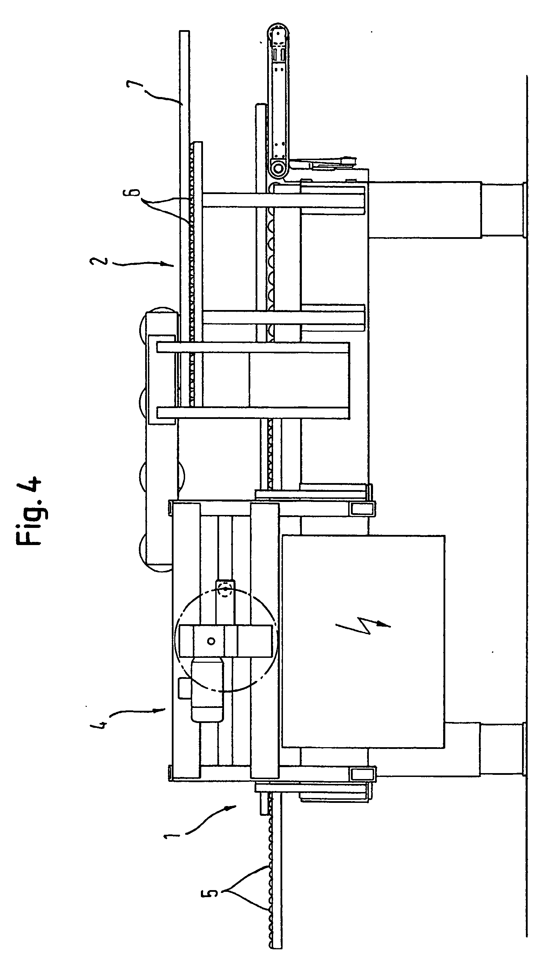

Die Fig. 1 bis 4 zeigen eine bevorzugte Ausführungsform der erfindungsgemäßen Vorrichtung zur Rückführung von bearbeiteten Werkstücken, wobei die Vorrichtung in Fig. 1 und 3 von der Seite und in Fig. 2 und 4 von hinten dargestellt ist.

Die erfindungsgemäße Vorrichtung ist an eine bestehende (nicht dargestellte) Bearbeitungseinheit angebaut, beispielsweise an eine Kantenanbringvorrichtung zum Einpressen von Stegkanten in die Ränder von plattenförmigen Holzwerkstücken. Die Werkstücke 7 (Fig. 4) laufen von der Bearbeitungseinheit her in eine Übernahmeeinrichtung 1 ein (in die Zeichenebene hinein in Fig. 1 und 3 sowie nach links in Fig. 2 und 4) und werden dann mittels einer Hubeinrichtung mit einem Hubtisch 3 zu einer Rücklaufeinrichtung 2 hin angehoben, die die Werkstücke 7 zurück zur Beschickungsseite der Bearbeitungseinheit befördert (aus der Zeichenebene heraus in Fig. 1 und 3 sowie nach rechts in Fig. 2 und 4).

Die Hubeinrichtung der erfindungsgemäßen Vorrichtung weist einen Kurbeltrieb 4 auf, mittels dessen der Hubtisch 3 anhebbar und absenkbar ist und der im folgenden noch genauer beschrieben wird.

Aus Fig. 2 wird deutlich, dass die Rücklaufeinrichtung 2 in dieser Ausführungsform eine Rücklaufbahn 9 aufweist, die zwischen der Rückführposition und der Beschickungsseite derart gegenüber der Horizontalen geneigt ist, dass die Werkstücke unter Ausnutzung der Schwerkraft zur Beschickungsseite der Bearbeitungseinheit zurück transportiert werden. Sowohl die Übernahmeeinrichtung 1 als auch die Rücklaufbahn 9 weisen drehbare Transportrollen 5 bzw. 6 auf, deren Drehachsen senkrecht zur Beförderungsrichtung der Werkstücke liegen.

Fig. 3 zeigt zwei Stellungen des Hubtisches 3, der ebenfalls mit drehbaren Transportrollen 8 versehen ist. In der in Fig. 3 mit durchgezogenen Linien dargestellten Grundstellung kann ein Werkstück auf den Hubtisch 3 auflaufen. Anschließend wird der Hubtisch 3 mittels des Kurbeltriebs 4 in die mit gestrichelten Linien dargestellte Stellung auf der Höhe der Rücklaufbahn 9 angehoben, so dass das Werkstück von dem Hubtisch 3 an die Rücklaufbahn 9 übergeben werden kann und auf der Rücklaufbahn 9 zur Beschickungsseite zurückläuft. Aus Fig. 3 wird außerdem deutlich, dass die Führung des Hubtisches 3 gegenüber der Vertikalen geneigt ist, wobei die Neigung der Führung mittels einer Stellvorrichtung 15 einstellbar ist. Die Einstellbarkeit der Neigung der Führung des Hubtisches 3 dient dazu, die erfindungsgemäße Vorrichtung an verschiedene bestehende Bearbeitungseinheiten anpassbar zu machen: die Führung wird jeweils so weit geneigt, dass die Anordnung aus Führung und Kurbeltrieb 4 in einem Bereich angeordnet werden kann, in dem sie nicht mit der bestehenden Bearbeitungseinheit kollidiert. Eine Antriebsvorrichtung 16 für den Kurbeltrieb 4 ist aus Fig. 3 ebenfalls ersichtlich.

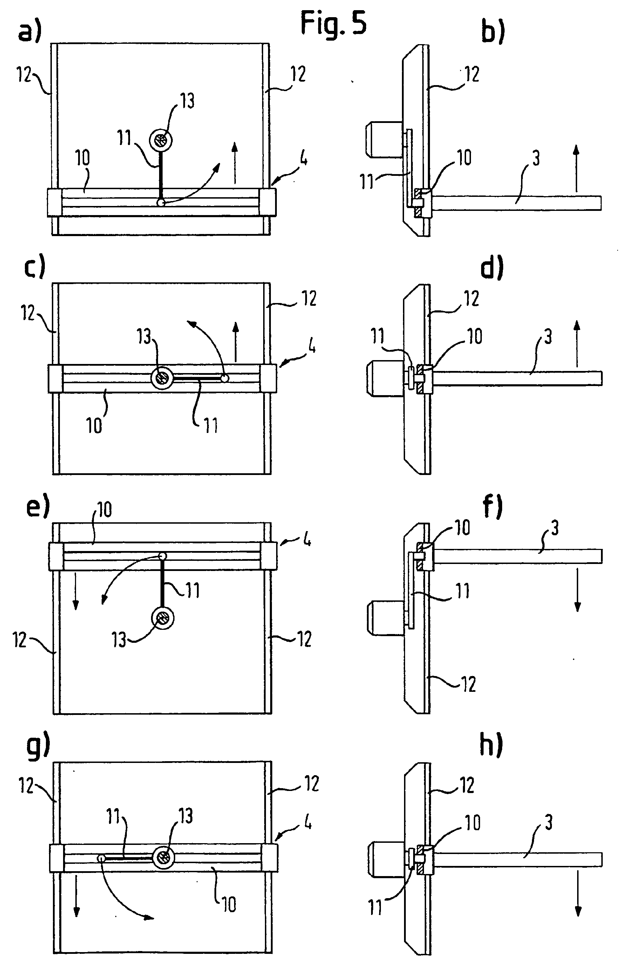

Fig. 5 verdeutlicht die Ausgestaltung und Arbeitsweise des Kurbeltriebs 4. Eine Kurbel 11 dreht sich um eine Drehachse 13, die mittels der Antriebsvorrichtung 16 (Fig. 3) angetrieben ist. Das freie Ende der Kurbel 11 läuft in einer Fahrschiene 10, die ihrerseits mittels zweier Führungsschienen 12 geführt ist. Das freie Ende der Kurbel 11 läuft während der Drehbewegung der Kurbel 11 in der Fahrschiene und bewegt die Fahrschiene 10 derart, dass sie aufgrund der Drehbewegung der Kurbel 11 eine Auf- und Ab-Bewegung ausführt: Aus einer in Fig. 5a/b gezeigten Grundstellung, in der ein Werkstück auf den Hubtisch 3 auflaufen kann, bewegt sich der Hubtisch 3, aufgrund einer halben Drehung der Kurbel 11 entgegen dem Uhrzeigersinn, durch die in Fig. 5 c/d dargestellte Zwischenposition nach oben in die in Fig. 5 e/f gezeigte Stellung, in der das Werkstück an die Rücklaufeinrichtung übergeben werden kann. Während der folgenden halben Drehung der Kurbel 11 bewegt sich die Fahrschiene 10 wieder abwärts (Fig. 5 g/h), so dass der damit gekoppelte Hubtisch 3 wieder in die Grundstellung (Fig. 5 a/b) gebracht wird, in der das nächste Werkstück auf den Hubtisch 3 auflaufen kann.

Die erfindungsgemäße Vorrichtung ermöglicht aufgrund des Antriebs des Hubtisches 3 mittels des Kurbeltriebes 4 einen vorteilhaften Ablauf der Bewegung des Hubtisches 3: Der Anlauf der Hubeinrichtung aus der Grundstellung (Fig. 5 a/b) erfolgt sanft, da sich die Kurbel 11 im Anlauf durch den unteren Totpunkt der Auf- und Ab-Bewegung der Fahrschiene 10 bewegt. Dadurch wird verhindert, dass sich das auf dem Hubtisch 3 befindliche Werkstück aufgrund seiner Trägheit auf dem Hubtisch 3 verschiebt oder sogar von ihm herunterfällt. Anschließend an diesen sanften Anlauf wird die Fahrschiene 10 mit steigendem Drehwinkel der Kurbel 11 immer stärker beschleunigt, bis in der in Fig. 5 c/d gezeigten Stellung, in der sich die Kurbel 11 gegenüber der Grundstellung um 90° gedreht hat, die höchste Geschwindigkeit der Fahrschiene 10 und somit eine vorteilhaft hohe Transportgeschwindigkeit der Werkstücke erreicht ist, um eine ausreichend hohe Taktleistung der Rückführvorrichtung zu erhalten. Daraufhin wird der Hubtisch 3 am Ende der Hubbewegung (Drehwinkel der Kurbel 11: 90° bis 180° gegenüber der Grundstellung) sanft abgebremst, bis bei einem Drehwinkel der Kurbel 11 von 180° gegenüber der Grundstellung der obere Totpunkt der Bewegung der Fahrschiene 10 erreicht ist. Der Hubtisch 3 befindet sich dann in der Rückführposition, in der das auf dem Hubtisch 3 befindliche Werkstück an die Rücklaufbahn übergeben werden kann.

Der Kurbeltrieb 4 kann dabei kontinuierlich umlaufen, falls die Hubeinrichtung so mit der Bearbeitungseinheit synchronisiert ist, dass immer dann ein Werkstück auf den Hubtisch 3 aufläuft, wenn sich dieser gerade in seiner Grundstellung (Fig. 5 a/b) befindet. Dazu kann die Drehzahl des Kurbeltriebs 4 geeignet eingestellt werden, oder es kann eine übergeordnete Steuerung vorgesehen sein, die den Antrieb 16 des Kurbeltriebs 4 mit der Bearbeitungseinheit synchronisiert.

Alternativ kann der Kurbeltrieb 4 so angesteuert werden, dass er den Hubtisch 3 immer dann von der Grundstellung in die Rückführposition bewegt, wenn sich ein Werkstück auf dem Hubtisch 3 befindet. Dazu kann ein (nicht dargestellter) Sensor vorgesehen sein, der das Auflaufen eines Werkstücks auf den Hubtisch 3 erfasst und an eine übergeordnete Steuerung übermittelt, die den Kurbeltrieb 4 ansteuert. Der Hubtisch 3 wird anschließend durch eine halbe Drehung der Kurbel 11 wieder in die Grundstellung zurückgefahren, sobald das Werkstück den Hubtisch 3 verlassen hat, was ebenfalls von einem Sensor erfasst werden kann.

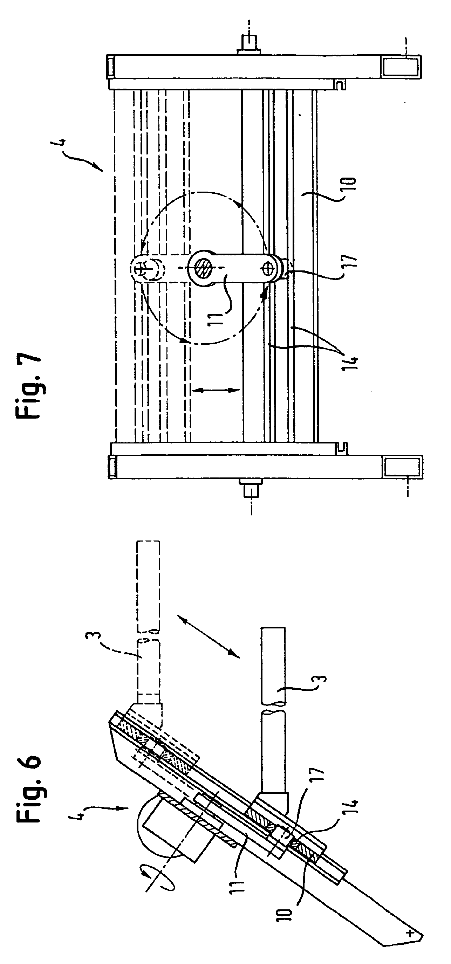

Fig. 6 und 7 zeigen detailliert den Kurbeltrieb 4 und den Hubtisch 3, wobei wiederum die Grundstellung des Hubtisches 3 mit durchgezogenen Linien und die Rückführstellung des Hubtisches 3 mit gestrichelten Linien dargestellt ist. Außerdem ist ersichtlich, dass die Fahrschiene 10 Leisten 14 zur Aufnahme des freien Endes der Kurbel 11 aufweist, die in die Fahrschiene 10 eingeklebt sind und aus gehärtetem Material bestehen, um den Verschleiß der bewegten Teile möglichst gering zu halten. Das freie Ende der Kurbel 11 trägt außerdem eine Rolle 17, wodurch sich die Reibung zwischen dem Kurbelende und der Fahrschiene vermindert, so dass sich der Wirkungsgrad der Vorrichtung erhöht.

## Patentansprüche

1. Vorrichtung zur Rückführung von bearbeiteten Werkstücken (7) von der Ausgabeseite zu der Beschickungsseite einer Bearbeitungseinheit, welche Vorrichtung eine Übernahmeeinrichtung (1) zur Übernahme der Werkstücke (7) an der Ausgabeseite der Bearbeitungseinheit, eine Rücklaufeinrichtung (2) zum Transportieren der von der Übernahmeeinrichtung (1) angelieferten Werkstücke (7) zurück zur Beschickungsseite der Bearbeitungseinheit oder zu einer weiteren Bearbeitungseinheit, und eine Hubeinrichtung zum Anheben der Werkstücke (7) in eine oberhalb der Ausgabehöhe liegende Rückführposition aufweist, wobei die Hubeinrichtung zwischen der Übernahmeeinrichtung (1) und der Rücklaufeinrichtung (2) angeordnet ist und einen Hubtisch (3) aufweist,
**dadurch gekennzeichnet, dass**
die Hubeinrichtung einen Kurbeltrieb (4) aufweist, mittels dessen der Hubtisch (3) anhebbar und absenkbar ist.

2. Vorrichtung nach Anspruch 1, **dadurch gekennzeichnet, dass** der Kurbeltrieb (4) eine angetriebene Drehachse (13) aufweist, an der eine Kurbel (11) angebracht ist.

3. Vorrichtung nach Anspruch 2, **dadurch gekennzeichnet, dass** die Hubeinrichtung eine mit dem Hubtisch (3) gekoppelte Fahrschiene (10) aufweist ist, in der das freie Ende der Kurbel (11) geführt ist und die mit dem Hubtisch (3) in Verbindung steht, wobei die Fahrschiene (10) in ihrer Hubbewegung mittels zumindest einer Führungsschiene (12) geführt ist.

4. Vorrichtung nach Anspruch 3, **dadurch gekennzeichnet, dass** die zumindest eine Führungsschiene (12) vertikal verläuft.

5. Vorrichtung nach Anspruch 3, **dadurch gekennzeichnet, dass** die zumindest eine Führungsschiene (12) gegenüber der Vertikalen geneigt ist.

6. Vorrichtung nach einem der Ansprüche 3 bis 5, **dadurch gekennzeichnet, dass** die Neigung der zumindest einen Führungsschiene (12) einstellbar ist.

7. Vorrichtung nach Anspruch 6, **dadurch gekennzeichnet, dass** zur Einstellung der Neigung der zumindest einen Führungsschiene (12) eine mechanisch, elektrisch, hydraulisch oder pneumatisch betätigbare Stellvorrichtung (15) vorgesehen ist.

8. Vorrichtung nach einem der Ansprüche 3 bis 7, **dadurch gekennzeichnet, dass** die Fahrschiene (10) gehärtete Leisten (14) zur Aufnahme des freien Endes der Kurbel (11) aufweist, welche insbesondere eingeklebt sind.

9. Vorrichtung nach einem der Ansprüche 3 bis 8, **dadurch gekennzeichnet, dass** das freie Ende der Kurbel (11) eine Rolle (17) trägt, die in Längsrichtung der Fahrschiene (10) verfahrbar ist.

10. Vorrichtung nach einem der vorangehenden Ansprüche, **dadurch gekennzeichnet, dass** drehbare Transportrollen (8) an dem Hubtisch angeordnet sind, deren Drehachsen im wesentlichen senkrecht zur Transportrichtung des Werkstücks (7) liegen.

11. Vorrichtung nach Anspruch 10, **dadurch gekennzeichnet, dass** die Transportrollen (8) angetrieben sind.

12. Vorrichtung nach einem der vorangehenden Ansprüche, **dadurch gekennzeichnet, dass** der Kurbeltrieb (4) mit zumindest einer Bearbeitungseinheit synchronisiert ist.

13. Vorrichtung nach einem der vorangehenden Ansprüche, **dadurch gekennzeichnet, dass** die Rücklaufeinrichtung (2) eine Rücklaufbahn (9) aufweist.

14. Vorrichtung nach Anspruch 13, **dadurch gekennzeichnet, dass** die Rücklaufbahn (9) zwischen der Rückführposition und der Beschickungsseite bzw. der weiteren Bearbeitungseinheit derart gegenüber der Horizontalen geneigt ist, dass die Werkstücke (7) unter Ausnutzung der Schwerkraft zur Beschickungsseite der Bearbeitungseinheit bzw. zu der weiteren Bearbeitungseinheit zurücktransportiert werden.

15. Vorrichtung nach Anspruch 13 oder 14, **dadurch gekennzeichnet, dass** drehbare Transportrollen (6) an der Rücklaufbahn (9) angeordnet sind, deren Drehachsen im wesentlichen senkrecht zur Transportrichtung des Werkstücks (7) liegen.

16. Vorrichtung nach Anspruch 13, **dadurch gekennzeichnet, dass** die Rücklaufbahn (9) ein angetriebenes Transportband aufweist.

## Claims

1. Device for returning machined workpieces (7) from the output side to the charging side of a machining unit, which device has a transfer device (1) for transferring the workpieces (7) to the output side of the machining unit, a return device (2) for transporting the workpieces (7) delivered by the transfer device (1) back to the charging side of the machining unit or to a further machining unit, and a lifting device for raising the workpieces (7) to a return position lying above the output height, wherein the lifting device is arranged between the transfer device (1) and the return device (2) and has a lifting platform (3), **characterised in that** the lifting device has a crank gear (4), by means of which the lifting platform (3) can be raised and lowered.

2. Device according to claim 1, **characterised in that** the crank gear (4) has a driven axis of rotation (13), to which a crank (11) is attached.

3. Device according to claim 2, **characterised in that** the lifting device has a rail (10) coupled to the lifting platform (3) and in which the free end of the crank (11) is guided and which is connected to the lifting platform (3), wherein the rail (10) is guided in its lifting movement by means of at least one guide rail (12).

4. Device according to claim 3, **characterised in that** the at least one guide rail (12) runs vertically.

5. Device according to claim 3, **characterised in that** the at least one guide rail (12) is inclined with respect to the vertical.

6. Device according to one of claims 3 to 5, **characterised in that** the gradient of the at least one guide rail (12) can be adjusted.

7. Device according to claim 6, **characterised in that** to adjust the gradient of the at least one guide rail (12), a mechanically, electrically, hydraulically or pneumatically actuatable adjusting device (15) is provided.

8. Device according to one of claims 3 to 7, **characterised in that** the rail (10) has hardened strips (14) to receive the free end of the crank (11) which are in particular glued in place.

9. Device according to one of claims 3 to 8, **characterised in that** the free end of the crank (11) supports a roller (17) which can be moved in longitudinal direction of the rail (10).

10. Device according to one of the preceding claims, **characterised in that** rotatable transport rollers (8) are arranged on the lifting platform, the axes of rotation of which lie essentially vertically to the transport direction of the workpiece (7).

11. Device according to claim 10, **characterised in that** the transport rollers (8) are driven.

12. Device according to one of the preceding claims, **characterised in that** the crank gear (4) is synchronised with at least one machining unit.

13. Device according to one of the preceding claims, **characterised in that** the return device (2) has a return track (9).

14. Device according to claim 13, **characterised in that** the return track (9) is inclined with respect to the horizontal between the return position and the charging side or the further machining unit such that the workpieces (7) are transported back to the charging side of the machining unit or to the further machining unit utilising the gravitational force.

15. Device according to claim 13 or 14, **characterised in that** rotatable transport rollers (6) are arranged on the return track (9), the axes of rotation of which lie essentially vertically to the transport direction of the workpiece (7).

16. Device according to claim 13, **characterised in that** the return track (9) has a driven conveyer belt.

## Revendications

1. Dispositif pour ramener des pièces (7) usinées, du côté sortie au côté entrée d'une unité d'usinage, ledit dispositif présentant un dispositif de prise en charge (1) pour prendre en charge des pièces d'oeuvre (7) du côté sortie de l'unité d'usinage, un dispositif de retour (2) pour transporter les pièces d'oeuvre (7) livrées par le dispositif de prise en charge (1) en les ramenant au côté entrée de l'unité d'usinage ou à une autre unité d'usinage, et un dispositif de levage pour lever la pièce d'oeuvre (7) en une position de retour se trouvant au-dessus de la hauteur de délivrance, où le dispositif de levage est disposé entre le dispositif de prise en charge (1) et le dispositif de retour (2) et présente une table de levage (3),
**caractérisé en ce que**
le dispositif de levage présente une transmission à manivelle (4), au moyen de laquelle la table de levage (3) est susceptible d'être levée et abaissée.

2. Dispositif selon la revendication 1, **caractérisé en ce que** la transmission à manivelle (4) présente un axe de rotation (13) entraîné, sur lequel est montée une manivelle (11).

3. Dispositif selon la revendication 2, **caractérisé en ce que** le dispositif de levage présente une glissière de déplacement (10) couplée à la table de levage (3), glissière dans laquelle est guidée l'extrémité libre de la manivelle (11) et qui est reliée à la table de levage (3), la glissière de déplacement (10) étant guidée dans son déplacement de levée à l'aide d'au moins une glissière de guidage (12).

4. Dispositif selon la revendication 3, **caractérisé en ce que** la au moins une glissière de guidage (12) s'étend verticalement.

5. Dispositif selon la revendication 3, **caractérisé en ce que** la au moins une glissière de guidage (12) est inclinée par rapport à la verticale.

6. Dispositif selon l'une des revendications 3 à 5, **caractérisé en ce que** l'inclinaison de la au moins une glissière de guidage (12) est réglable.

7. Dispositif selon la revendication 6, **caractérisé en ce que**, pour le réglage de l'inclinaison de la au moins une glissière de guidage (12), est prévu un dispositif de réglage (15) actionnable mécaniquement, électriquement, hydrauliquement ou pneumatiquement.

8. Dispositif selon l'une des revendications 3 à 7, **caractérisé en ce que** la glissière de guidage (10) présente des bandes (14) durcies, pour recevoir l'extrémité libre de la manivelle (11), qui est en particulier intégrée par collage.

9. Dispositif selon l'une des revendications 3 à 8, **caractérisé en ce que** l'extrémité libre de la manivelle (11) porte un rouleau (17), déplaçable dans la direction longitudinale de la glissière de déplacement (10).

10. Dispositif selon l'une des revendications précédentes, **caractérisé en ce que** sur la table de levage sont disposés des rouleaux de transport (8) susceptibles de tourner, dont les axes de rotation sont situés sensiblement perpendiculairement à la direction de transport de la pièce d'oeuvre (7).

11. Dispositif selon la revendication 10, **caractérisé en ce que** les rouleaux de transport (8) sont entraînés.

12. Dispositif selon l'une des revendications précédentes, **caractérisé en ce que** la transmission à manivelle (4) est synchronisée à au moins une unité d'usinage.

13. Dispositif selon l'une des revendications précédentes, **caractérisé en ce que** le dispositif de retour (2) présente une piste de recirculation (9).

14. Dispositif selon la revendication 13, **caractérisé en ce que**, entre la position de retour et le côté d'éentrée ou l'autre unité d'usinage, la piste de recirculation (9) est inclinée par rapport à l'horizontal, de manière que les pièces d'oeuvre (7) soient retransportées en exploitant la force de la gravité, vers le côté entrée de l'unité d'usinage, ou vers l'autre unité d'usinage.

15. Dispositif selon la revendication 13 ou 14, **caractérisé en ce que** des rouleaux de transport (6) montés à rotation sont disposés sur la piste de recirculation (9), rouleaux dont les axes de rotation sont situés sensiblement, perpendiculairement à la direction de transport de la pièce d'oeuvre (7).

16. Dispositif selon la revendication 13, **caractérisé en ce que** la piste de recirculation (9) présente une bande transporteuse entraînée.
